(19) Europäisches Patentamt / European Patent Office / Office européen des brevets

(11) **EP 3 391 517 B1**

(12) **FASCICULE DE BREVET EUROPEEN**

(45) Date de publication et mention
de la délivrance du brevet:
**10.06.2020 Bulletin 2020/24**

(21) Numéro de dépôt: **16826090.9**

(22) Date de dépôt: **13.12.2016**

(51) Int Cl.:
*H02K 33/18* (2006.01)    *H02K 11/21* (2016.01)

(86) Numéro de dépôt international:
**PCT/FR2016/053363**

(87) Numéro de publication internationale:
**WO 2017/103424 (22.06.2017 Gazette 2017/25)**

(54) **ACTIONNEUR A CADRE DE BOBINE MOBILE ET DYNAMIQUE AMÉLIORÉE**

AKTUATOR MIT BEWEGLICHEM SPULENRAHMEN UND VERBESSERTER DYNAMIK

ACTUATOR WITH MOVING COIL FRAME AND ENHANCED DYNAMICS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.12.2015 FR 1562353**

(43) Date de publication de la demande:
**24.10.2018 Bulletin 2018/43**

(73) Titulaire: **Moving Magnet Technologies
25000 Besançon (FR)**

(72) Inventeurs:
• **LOUSSERT, Guillaume
25000 Besançon (FR)**
• **BIWERSI, Stéphane
25140 Frambouhans (FR)**

(74) Mandataire: **IP Trust
2, rue de Clichy
75009 Paris (FR)**

(56) Documents cités:
JP-A- H06 165 466     US-A1- 2011 175 462
US-A1- 2012 013 275

## Description

### DOMAINE TECHNIQUE DE L'INVENTION

La présente invention concerne un actionneur à cadre mobile bobiné qui présente des propriétés mécaniques et électriques lui conférant une grande habilité à modifier sa vitesse de déplacement. Cette très haute dynamique, caractérisée par des capacités importantes d'accélération et de décélération, permet de commander avec une grande précision un organe mobile oscillant sur une course angulaire déterminée avec un profil de vitesse présentant des accélérations fortement variables sur la course. En particulier, un tel actionneur peut être utilisé pour la réalisation d'un système d'éclairage adaptatif permettant un mode d'éclairage paramétrable, avec des variations d'intensité sur la zone éclairée.

Une des applications privilégiée, mais non limitative, concerne en effet l'éclairage pour véhicule automobile disposant d'une source laser qui produit un faisceau se reflétant sur un miroir et destiné à éclairer la chaussée. Les qualités dynamiques d'un actionneur selon l'invention permettront de rendre très flexible l'éclairage, en évitant par exemple certaines zones de la chaussée ou bien encore en permettant une illumination plus intense sur d'autres zones, ou au contraire atténuer l'intensité lumineuse, par exemple afin d'éviter d'éblouir un conducteur venant en sens opposé.

### ETAT DE LA TECHNIQUE ANTERIEURE

Les actionneurs de type dit « galvanomètres », en référence à leur utilisation d'origine dans les dispositifs de détection de courant, sont déjà bien connus et ils revêtent différentes formes. Ils peuvent être à noyau de fer mobile, à aimant mobile ou à bobine mobile. Ils sont avantageusement utilisés dans des applications d'oscillateurs dynamiques fonctionnant typiquement à plusieurs dizaines ou centaines d'Hertz. Le document JP H06 165466 concerne un actionneur similaire.

Ces galvanomètres sont ainsi solidaires d'un organe extérieur à déplacer sur une course, linéaire ou le plus souvent angulaire, généralement de plusieurs degrés à plusieurs dizaines de degrés. Un exemple typique est le déplacement d'un miroir lorsque l'on considère l'application de déviation de faisceau lumineux. Le mouvement est alors périodique suivant une fréquence principale et la partie mobile oscille à l'intérieur d'une course donnée.

Lorsque ces galvanomètres sont à noyau de fer mobile, ils présentent l'avantage d'une dissipation thermique facilitée, la bobine électrique étant disposée au stator et pouvant être généreusement dimensionnée, leur permettant de déplacer de fortes charges sans échauffement critique. Ils présentent cependant de fortes inerties et inductances interdisant leur utilisation pour des fréquences élevées, restant typiquement sous les 50 Hz de fonctionnement.

Lorsqu'ils sont à aimant mobile, Ils présentent toujours des inerties mobiles relativement importantes et, bien que présentant des inductances plus faibles que les actionneurs à fer mobile, leur utilisation ne peut pas être envisagée pour des mouvements à des fréquences typiquement supérieures à 100Hz. Dans l'exemple présenté dans le document US6275319, qui propose un galvanomètre pour scanner laser, la fréquence de fonctionnement est de l'ordre de la centaine d'Hertz. L'actionneur comporte, de plus, un élément de rappel élastique présentant une réponse non linéaire. Cette non-linéarité permet à l'actionneur de bénéficier d'une assistance à l'accélération et à la décélération et de limiter les résonances parasites de la structure, résonances parasites causées, entre autres, par l'inertie trop importante de l'aimant mobile.

Lorsqu'ils sont à bobine mobile, ils sont toujours constitués d'une bobine de conducteur électrique (type cuivre, aluminium, voire argent) sous la forme d'un ou plusieurs tours enroulés sur un support mécanique voire autoportés si la bobine ainsi constituée est résinée par exemple. Leur avantage réside dans l'inertie et l'inductance faibles qu'il est possible d'obtenir avec ces topologies. L'inconvénient peut éventuellement être la faible dissipation thermique imposée par les faibles volumes de conducteurs électriques constitués et le fait que ces bobines sont, le plus souvent, majoritairement en contact avec l'air dans lequel elles se déplacent, sans contact avec un conducteur thermique.

Les faibles inertie et inductance des solutions à cadre mobile permettent de les utiliser dans des applications où la fréquence de fonctionnement est plus importante (typiquement plusieurs dizaines à centaines d'Hertz).

Le fonctionnement des actionneurs de l'art antérieur étant généralement à fréquence de fonctionnement fixe, il est connu et avantageux d'utiliser ces actionneurs en conjonction avec un élément de rappel élastique ayant une raideur mécanique qui fixe une certaine fréquence de résonance mécanique dépendant de cette raideur et de la masse ou inertie en mouvement.

On trouve ainsi des documents qui présentent de tels dispositifs, comme par exemple le document US3735258, présentant un déflecteur pour faisceau de lumière utilisant un cadre mobile de type galvanométrique. La solution proposée fonctionne à l'aide d'un ressort de torsion et cherche à optimiser une fréquence unique de fonctionnement en égalisant les fréquences de résonance mécanique et électromécanique mettant en jeu l'inertie, l'inductance et la raideur mécanique du ressort.

L'inconvénient de cette structure est le choix d'utilisation d'un cadre mobile relativement long et de forme rectangulaire, devant servir à la fois de cadre moteur, plongé dans le champ magnétique fourni par des aimants fixes, et à la fois de tenue mécanique du réflecteur servant à dévier un rayon lumineux. Cette solution implique une inertie et une résistance électrique relativement importantes mais aussi une inductance importante. Elle impose aussi la réalisation d'une bobine en ruban d'aluminium afin d'obtenir une rigidité améliorée. Il en résulte un actionneur peu performant, sujet à des fréquences de résonances parasites, vraisemblablement onéreux à produire (de par les rubans d'aluminium, non conventionnels utilisés) et difficile à construire et à accorder en fréquence. De plus, la fréquence de coupure électrique du système RL ainsi constitué (association d'une résistance R en série avec une inductance L) peut être évaluée à 2.2 Hz, soit une valeur très faible qui fait que le système n'est destiné à être utilisé avec efficacité seulement autour de la fréquence de résonance électromécanique (résonance entre l'inductance et l'inertie).

On connait aussi par ailleurs, dans le domaine général des actionneurs oscillants, le document EP2686554 destiné à optimiser le fonctionnement dynamique d'un compresseur. Dans ce document, il est astucieusement proposé d'utiliser les deux fréquences de résonance mécanique et électromécanique du système afin de palier à un problème de charge électrique ponctuelle du système. Les deux fréquences sont à ce propos assez proches pour respecter l'efficacité du compresseur.

Ce dispositif est parfaitement dédié à l'utilisation d'un actionneur vibrant dans la cadre d'une utilisation à une fréquence fixée par la résonance mécanique (ou qui s'écarte de 1 ou 2 Hertz de cette fréquence fixée) ne s'éloignant pas de cette plage réduite et sous l'utilisation d'une alimentation purement sinusoïdale. La solution n'est donc pas dédiée à l'utilisation d'un système devant travailler à des fréquences variées et/ou avec un contenu harmonique important.

On connaît également la demande de brevet japonais JP6-165466 décrivant un cadre mobile pour le déplacement d'un miroir, constitué par une bobine cylindrique, positionnée entre deux parties magnétiques dont les génératrices sont parallèle à l'axe de rotation de la bobine.

Une telle réalisation conduit à une inertie élevée limitant la dynamique des déplacements du cadre mobile. Elle conduit aussi à une résistance et une inductance élevée.

## INCONVENIENTS DE L'ART ANTERIEUR

Les dispositifs de l'art antérieur ont pour objet de résoudre le problème général de l'efficience des fonctionnements fréquentiels. Dans ces systèmes, la vitesse de balayage est avant tout réalisée à fréquence fixe et surtout selon un déplacement, à l'intérieur de cette fréquence, qui présente un unique profil répété. La fréquence de fonctionnement est donc avant tout ajustée par les fréquences de résonance du système.

Ces dispositifs de l'art antérieur sont utilisés pour travailler autour de cette fréquence fixe avec un contenu harmonique faible.

Or, dans des systèmes où les vitesses de balayage doivent être variables, comme présentés par exemple dans le document EP2690352, ces actionneurs de l'art antérieur ne peuvent pas apporter une réponse satisfaisante car n'ayant pas, par leur nature résonante, la capacité à modifier leur fréquence de fonctionnement sans impacter grandement le rendement de l'actionneur.

De plus, si l'on prend par exemple l'application de balayage hautement dynamique des éclairages automobiles de type laser (fréquence typique de 200Hz), il y a une nécessité, à l'intérieur du mouvement imposé à une fréquence de balayage fixe, d'obtenir une grande variabilité de l'accélération avec la possibilité de ralentir ou accélérer le faisceau en différents endroits sur la course angulaire de l'actionneur.

Les dispositifs de l'art antérieur présentent ainsi des caractéristiques en vitesse fortement influencées par la raideur mécanique imprimée par les ressorts de torsion, avec des profils de type parabolique en fonction du temps, rendant difficile la possibilité de modifier ce profil de vitesse à l'intérieur de la fréquence principale d'utilisation.

EXPOSE DE L'INVENTION

La présente invention vise à pallier les inconvénients de l'état de la technique en proposant un actionneur ayant des propriétés géométriques et physiques optimisées minimisant l'importance de la fréquence de résonance mécanique, la fréquence de résonance mécanique $f_{rm}$ étant définie par la valeur $f_{rm} = \frac{1}{2\pi}\sqrt{\frac{K}{J}}$, où K est la raideur mécanique (en Nm/rad) et J le moment d'inertie mobile (en kg.m$^2$), par l'obtention d'une fréquence de coupure électrique et une fréquence de résonance électromécanique bien supérieures au signal périodique à fréquence principale alimentant l'actionneur, où la fréquence de coupure $f_{ce}$ du système électrique est définie par $f_{ce} = \frac{1}{2\pi}\frac{R}{L}$ avec R la résistance électrique (en Ohm) et L l'inductance (en H) et la fréquence électromécanique $f_{em}$ de l'actionneur est définie par $f_{em} = \frac{1}{2\pi}\sqrt{\frac{K+\frac{Kt^2}{L}}{J}}$ où Kt est la constante de couple de l'actionneur (en Nm/A).

Par ces caractéristiques, un autre objet de l'invention est de permettre l'alimentation électrique de l'actionneur avec un signal périodique à fréquence principale dont le contenu harmonique est riche (avec typiquement un harmonique de rang 5 ayant une amplitude supérieure à 10% de l'amplitude du signal modulant).

Afin de permettre ces fonctionnalités, la présente invention propose ainsi un actionneur à cadre mobile à forme elliptique, préférentiellement circulaire, permettant d'obtenir une très faible inertie, ajustée généralement à une valeur de l'ordre de celle de l'inertie de l'organe extérieur à déplacer, ainsi que des caractéristiques d'effort, d'inductance et de résistance optimisés pour repousser $t_{ce}$ et $f_{em}$ bien au-delà de la fréquence du signal périodique à fréquence principale.

Plus particulièrement, afin de répondre à ces objectifs, l'invention se réfère à un actionneur rotatif à cadre mobile constitué d'une bobine électrique se déplaçant sur une course angulaire autour d'un axe de rotation A, la bobine étant de forme cylindrique elliptique et l'axe de bobinage B étant orthogonal à l'axe de rotation A, la bobine étant placée dans le champ magnétique d'un aimant fixe, caractérisé en ce que l'aimant fixe entoure ladite bobine et est constitué de deux parties semi-cylindriques dont les génératrices sont orthogonales à l'axe de rotation A, la première des parties semi-cylindriques présentant un pôle Nord dirigé vers la bobine, orthogonalement à la direction des génératrices et étant positionnée à l'extérieur de la bobine, la deuxième présentant un pôle Sud dirigé vers la bobine, orthogonalement à la direction des génératrices et étant également positionnée à l'extérieur de la bobine à l'opposé de la première partie, l'actionneur comportant un noyau ferromagnétique intérieur à la bobine et une culasse ferromagnétique extérieure entourant l'aimant fixe, la bobine se déplaçant dans l'entrefer généré entre les parties semi-cylindriques aimantées et le noyau intérieur (6).

De manière préférentielle, la bobine est solidaire d'un arbre mécanique guidé à l'aide de la culasse extérieure.

Un des objets de l'invention est de permettre un fonctionnement même sans aucun élément de rappel élastique.

Afin de permettre un fonctionnement en boucle fermée, le système peut comporter en outre un circuit électronique de pilotage alimentant la bobine avec un signal d'une fréquence principale d'utilisation supérieure à 100 Hz.

Dans le cadre d'une application de déflection de lumière, l'arbre mécanique supporte un élément présentant une surface réfléchissante placée au voisinage direct de l'axe de rotation.

Dans le cas d'utilisation où de grandes variations de vitesse sont souhaitées, le circuit électronique de pilotage alimente la bobine avec un signal périodique à fréquence principale ayant un contenu harmonique présentant au moins une harmonique de rang supérieur à 5 ayant une amplitude supérieure à 10% de l'amplitude de la fréquence principale.

Pour effectuer un contrôle en boucle fermée, l'actionneur comporte en outre un capteur de position angulaire de ladite bobine, délivrant un signal audit circuit électronique de pilotage pour asservir la tension d'alimentation de ladite bobine en fonction d'un profil de référence de la vitesse en fonction de la position.

De manière préférentielle, ladite bobine présente une section longitudinale elliptique circulaire mais elle peut aussi être envisagée en forme elliptique non circulaire.

Dans le mode préféré, ledit arbre mécanique traverse ledit noyau ferromagnétique, sans contact ni guidage avec ledit noyau bien qu'il peut être envisagé que ledit arbre mécanique est guidé au niveau dudit noyau ferromagnétique, sans contact ni guidage avec culasse ferromagnétique.

Dans un mode de mise en œuvre particulier ledit arbre mécanique présente un aimant capteur positionné au voisinage d'une sonde magnétosensible et coopérant avec ladite sonde détectant la position de l'aimant capteur.

Lors de l'utilisation d'un aimant capteur, l'actionneur est piloté par un signal périodique à fréquence principale et présente, en interaction magnétique avec l'aimant capteur, une fréquence de résonance mécanique inférieure ou égale à ladite fréquence principale.

Afin de minimiser l'inductance de la bobine, le noyau et la culasse extérieure pourront être réalisés par empilement de tôles ferromagnétiques.

L'invention concerne aussi un procédé de commande d'un actionneur pour un système d'éclairage adaptatif comportant un actionneur tel que définit caractérisé en ce que la valeur de la tension d'alimentation de la bobine est modifiée périodiquement en fonction d'un signal de position provenant d'un capteur de position angulaire de ladite bobine et d'un profil de la vitesse en **fonction de la position.**

**BREVE DESCRIPTION DES FIGURES**

D'autres caractéristiques et avantages de l'invention ressortiront à la lecture qui suit d'exemples de réalisation détaillés, en référence aux figures annexées qui représentent respectivement :

- les figures 1a et 1b, des vues respectivement de face et en perspective d'un actionneur selon l'invention ;
- la figure 2, une vue de face de l'actionneur dans un premier mode de réalisation de l'aimantation;
- la figure 3, une vue de face de l'actionneur dans un deuxième mode de réalisation de l'aimantation;
- les figures 4a et 4b, des vues respectivement en perspective coupée selon le plan P et en agrandissement de ladite perspective d'un actionneur selon l'invention ;
- la figure 5, une vue en perspective d'un ensemble actionneur et capteur de position utilisé pour déplacer et détecter la position d'un miroir,
- les figures 6a et 6b, des vues en coupe transversale à l'axe de rotation (A) avec la bobine dans deux positions extrêmes de course,
- la figure 7, une vue en coupe transversale à l'axe de rotation (A) où les éléments fixes ferromagnétiques sont réalisés en paquet de tôles,
- la figure 8, une vue en coupe longitudinale, selon l'axe de rotation (A), de l'actionneur dans un premier mode d'alimentation électrique de la bobine,

- la figure 9, une vue en coupe longitudinale, selon l'axe de rotation (A), de l'actionneur dans un deuxième mode d'alimentation électrique de la bobine,
- la figure 10, une vue de face d'un actionneur selon l'invention en superposition avec des lignes de champ suivant le premier mode de réalisation de l'aimantation,
- la figure 11, une vue de face d'un actionneur selon l'invention en superposition avec des lignes de champ suivant le deuxième mode de réalisation de l'aimantation,
- la figure 12, l'évolution, à titre d'exemple, de la vitesse et de la position possibles avec un actionneur selon l'invention, ainsi qu'une décomposition harmonique de la vitesse,
- la figure 13, une vue de face d'un actionneur selon un mode de réalisation alternative à bobine de section longitudinale à forme elliptique non circulaire.

**DESCRIPTION DETAILLEE D'UN MODE DE REALISATION**

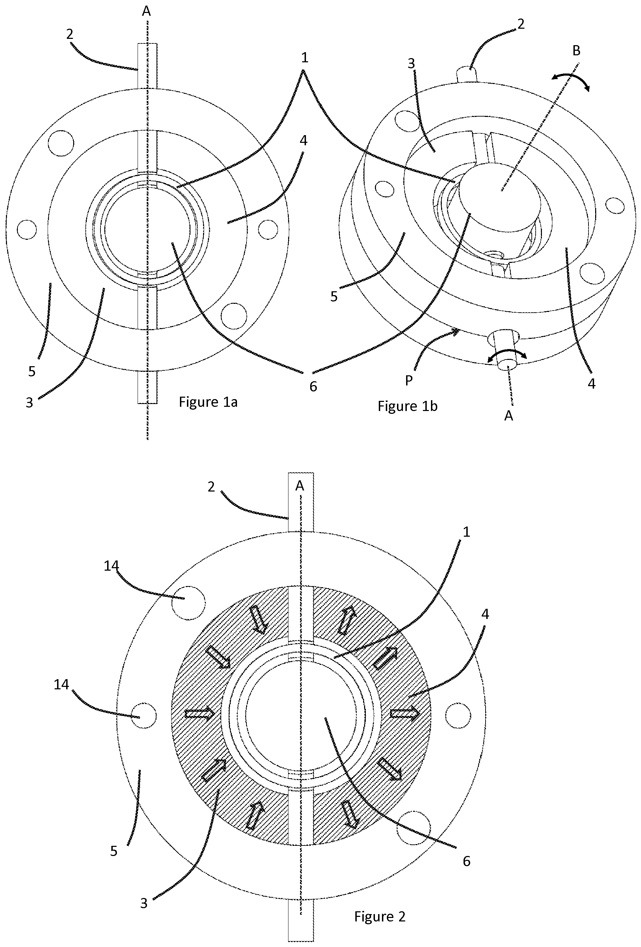

Les figures 1a et 1b présentent un actionneur selon l'invention. Il comprend une bobine électrique (1) mobile en rotation autour d'un axe (A) et constituée d'un ensemble de spires conductrices électriques. La bobine (1) est de forme cylindrique elliptique, ici sous une forme privilégiée circulaire, et l'axe de bobinage B des spires est orthogonal à l'axe de rotation (A). Du fait de la rotation de la bobine autour de l'axe (A), l'axe de bobinage (B) a une orientation se déplaçant dans l'espace mais restant toujours orthogonal à l'axe de rotation (A).

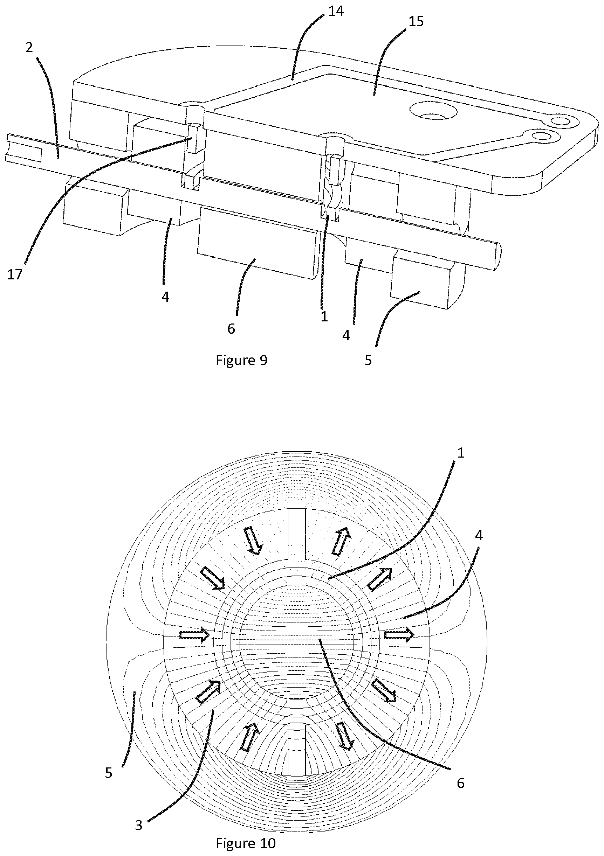

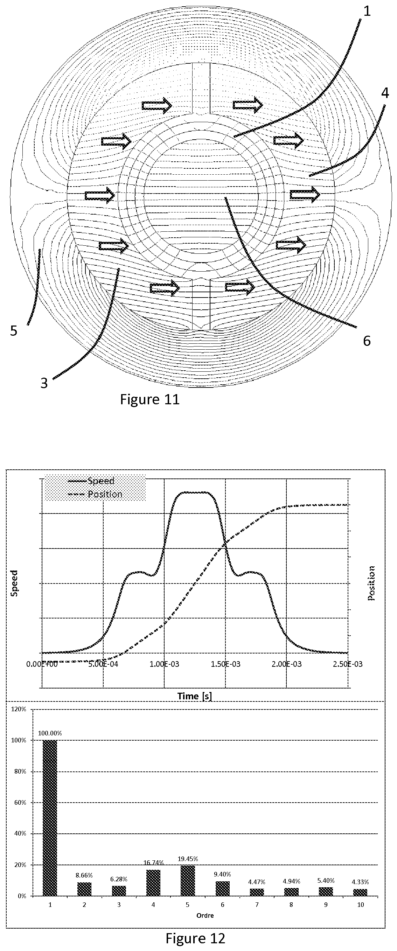

La bobine (1) est fixée à un arbre mécanique (2) qui sert de support à la bobine et qui sert aussi à déplacer solidairement un organe extérieur (non montré ici). La bobine (1) est mobile en rotation relativement à une partie fixe formée par deux aimants permanents (3, 4) semi-cylindriques dont les génératrices, non montrées, sont orthogonales à l'axe de rotation A. Ces aimants permanents (3, 4) présentent une aimantation dont la ou les directions sont orthogonales aux génératrices des aimants tubulaires afin que le champ magnétique produit par les aimants (3, 4) soit majoritairement orienté dans un ensemble de plans parallèles au plan défini par l'axe de rotation A et un axe perpendiculaire aux parties aimantées semi-cylindriques, comme illustré en figures 10 et 11.

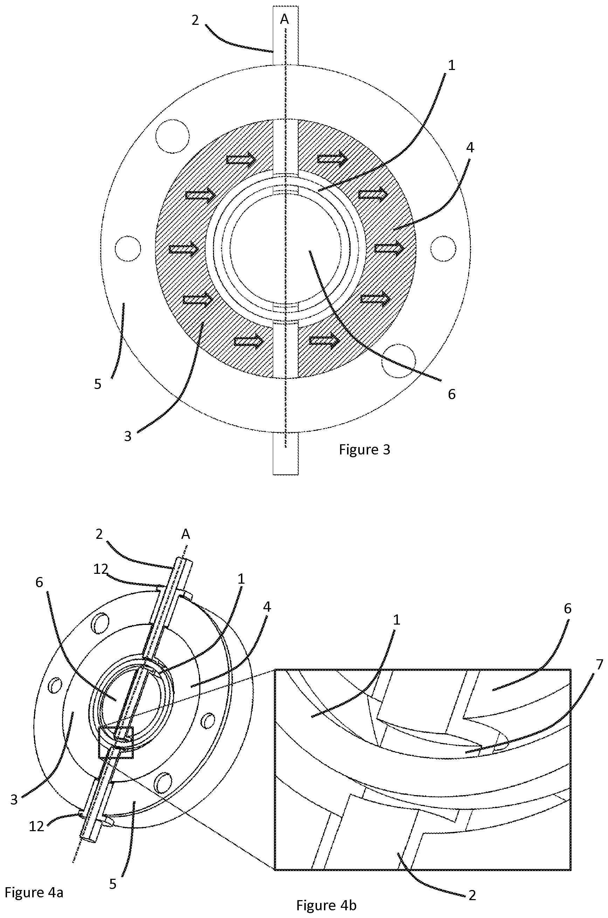

L'aimantation des aimants (3, 4) est telle que l'un des aimants (3) doit présenter un pôle Nord orienté vers l'entrefer et la bobine (1), et l'autre aimant (4) doit présenter un pôle Nord orienté à l'opposé de l'entrefer et la bobine (1), sans importance sur le positionnement des aimants (3, 4) à gauche ou à droite de la bobine (1). Comme présenté en figure 2, l'aimantation des parties aimantées (3, 4), représentée par des flèches larges évidées sur les aimants, peut être radiale relativement à la forme cylindrique circulaire des parties aimantées (3, 4) ou, comme présenté en figure 3, diamétrale relativement à la forme cylindrique circulaire des parties aimantées (3, 4). Avantageusement, l'aimantation radiale présentée en figure 2 permet d'obtenir de meilleures performances de l'actionneur en permettant une constante de couple de l'actionneur optimisée et une direction plus radiale du champ dans l'entrefer comme on peut l'apprécier sur les figures 10 et 11, vues de lignes de champ des cas présentés respectivement en figures 2 et 3.

Les perçages (14) qui peuvent être vus en figure 2 notamment, servent à des éléments d'indexation et de fixation et sont tout à fait optionnels, n'ayant aucune influence sur les performances de l'actionneur et sur l'objet de l'invention.

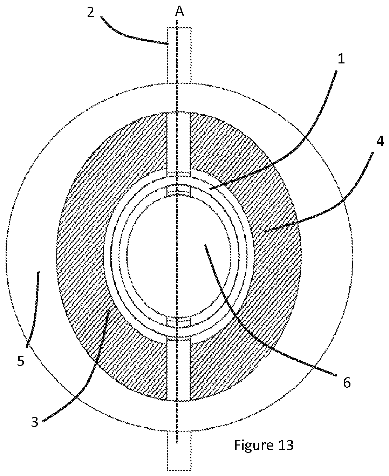

Ces aimants (3, 4) se placent de part et d'autre, extérieurement, de la bobine (1). Ces aimants (3, 4) sont solidaires d'une culasse extérieure (5) en matière ferromagnétique douce entourant les aimants (3, 4) afin de permettre au flux magnétique de circuler entre les aimants (3, 4) et de maximiser l'induction dans l'entrefer. Sur l'intérieur de la bobine (1) cylindrique est présent un noyau intérieur (6), fixe par rapport à la bobine (1), lui aussi en matière ferromagnétique douce afin de canaliser le champ magnétique produit par les aimants (3, 4). La bobine (1) est ainsi positionnée dans un entrefer formé entre l'aimant (3) et le noyau intérieur (6) d'une part pour une partie de la bobine (1) et dans un entrefer formé entre l'aimant (4) et le noyau intérieur (6) d'autre part pour une autre partie de la bobine (1). Tous les éléments à la partie fixe : aimants (3, 4), noyau intérieur (6) et culasse extérieure (5) sont, dans cet exemple, circulaires ce qui permet d'optimiser la forme et le volume des éléments. Il est bien sûr possible d'envisager une culasse extérieure non circulaire, parallélépipédique par exemple, sans modifier le fonctionnement ni les performances de l'actionneur. La forme globalement circulaire de la bobine est cependant une forme optimisée permettant d'obtenir des performances maximisées de l'actionneur. Une forme générale elliptique peut être envisagée pour la bobine (1) pour adapter la structure à une utilisation particulière, comme présenté à titre d'exemple en figure 13.

Le fonctionnement de l'actionneur, suivant la loi de Laplace bien connue, est le suivant: lorsqu'un courant circule dans la bobine (1), le conducteur, plongé dans le champ magnétique des deux entrefers définis plus haut, subit un effort qui tend à créer un couple autour de l'axe de rotation (A). En alternant le sens de circulation du courant dans la bobine (1), il est donc possible d'appliquer un couple positif ou négatif et de réaliser une oscillation de la bobine (1) autour de l'axe de rotation (A). L'axe de bobinage (B) s'oriente donc en conséquence relativement à l'axe de rotation (A). La bobine (1) est entièrement plongée dans les entrefers définis, de sorte que, lorsque l'oscillation de la bobine est de l'ordre de quelques degrés (typiquement jusqu'à une vingtaine ou trentaine de degrés), la constante de couple qui est obtenue est quasiment constante sur la course, favorisant un pilotage aisé de l'actionneur en pilotant l'intensité de courant circulant.

Il n'existe, dans l'actionneur, aucun ressort mécanique ou magnétique, de sorte que la bobine (1) est totalement libre et déplacée par le couple magnétique créé par la circulation de courant. Il peut donc être important de réaliser des butées mécaniques pour éviter que la bobine (1) entre en contact avec le noyau interne (6) lors de sa rotation.

Le fait qu'il n'existe pas de ressort mécanique ou magnétique dans l'actionneur, rend le pilotage du positionnement de la bobine (1) plus aisé. De même, la dynamique de mouvement très flexible est favorisée par les formes cylindriques elliptiques, et particulièrement ici circulaires, de la bobine (1) est des aimants (3, 4) qui permettent de minimiser l'inductance et l'inertie de la bobine (1) tout en conservant une constante de couple importante. Ces facteurs inductance et inertie, ainsi que la constante de couple, sont ainsi grandement améliorés par rapport aux topologies de l'art antérieur. La fréquence de résonance électromécanique de l'actionneur est ainsi relativement haute et repoussée bien au-delà de la fréquence de fonctionnement principale (ordres de grandeurs typiques : 200 Hz pour la fréquence de fonctionnement principale et 1 kHz à 1.5 kHz pour la fréquence électromécanique). Cette différence marquée permet d'envisager un signal de commande riche en harmonique (typiquement un harmonique 5 d'amplitude typiquement supérieure à 10% de l'amplitude de la fréquence principale) permettant de générer des profils de vitesse très différents suivant les cahiers des charges demandés. La fréquence de coupure électrique du système est aussi, du fait du rapport entre la résistance et l'inductance, repoussée bien au-delà de la fréquence de fonctionnement principal (ordre de grandeur typique supérieur à 10 kHz).

Les performances typiques qu'il est possible d'obtenir avec un actionneur réalisé suivant l'invention sont illustrées en figure 12 à titre d'exemple. Comme il peut être apprécié, des profils de vitesses et position en fonction du temps très différents sont possibles avec un tel actionneur. Ces profils très différents sont appréciés particulièrement à la vue de la décomposition harmonique qui est réalisée. On peut notamment remarquer que le contenu harmonique est relativement important par rapport à l'amplitude du signal de fréquence principal (ici l'harmonique de rang 1 est à 200Hz) avec des harmoniques d'amplitudes importantes (> 10%) jusqu'au rang 6 typiquement, bien que ce contenu ne soit aucunement limitatif.

La figure 4a montre une vue de perspective et en coupe suivant le plan médian P visible en figure 1b. Elle permet notamment de voir les éléments de guidage (12), tels des paliers, qui servent à guider l'arbre mécanique (2) en rotation. Avantageusement mais non limitativement, l'arbre mécanique (2) est réalisé en une matière rigide (métallique, fibre de carbone,...) qui permet de conserver un diamètre relativement faible, afin de minimiser l'inertie en mouvement, tout en gardant une rigidité satisfaisante empêchant l'actionneur de présenter une déformation orthogonalement à l'axe de rotation (A), lors de la rotation, et limitant ainsi les fréquences parasites lors du fonctionnement. L'arbre mécanique (2) sera cependant préférentiellement en une matière amagnétique. Les éléments de guidage (12) sont avantageusement réalisés en un matériau limitant le coefficient de frottement avec l'axe de rotation, tel une matière PTFE ou une matière polymère thermoplastique à faible coefficient de frottement. Afin de ne pas créer d'hyperstatisme préjudiciable il n'y a préférentiellement pas de guidage de l'arbre mécanique (2) au niveau du noyau (6), le diamètre de l'arbre (2) étant inférieur au diamètre de passage au niveau du noyau (6).

L'agrandissement en figure 4b permet d'apprécier l'attache de la bobine (1) sur l'arbre mécanique (2). Une possibilité intéressante mécaniquement est en effet de réaliser des méplats (7) sur l'arbre (2) afin de réaliser une zone d'accueil plane pour la fixation de la bobine (1). La bobine sera préférentiellement positionnée au plus proche de l'axe de rotation (A) afin de conserver un centre d'inertie mobile proche de cet axe (A) et limiter ainsi la sensibilité aux vibrations extérieures transmises à l'actionneur. Ce positionnement sera aussi préférable pour garantir une constante de couple optimale pour l'actionneur.

La bobine est avantageusement bobinée et noyée dans une résine de type thermodurcissable (epoxy par exemple), apportant rigidité à la bobine tout en garantissant légèreté et minimisant ainsi le moment d'inertie.

La bobine ainsi résinée et rigidifiée peut alors être placée (collée par exemple) sur l'arbre mécanique (2) au niveau des méplats (7). En ce sens un arbre métallique est préférable.

Un des avantages de la liaison mécanique entre la bobine (1) et l'arbre mécanique (2) tient aussi dans la dissipation thermique permise par les contacts entre bobine (1) et arbre (2) au niveau des méplats (7). En effet, ce contact, même limité, permet d'évacuer la chaleur produite par effet Joule par la bobine (1) dans l'arbre (2) et permet ainsi de bénéficier d'une résistance thermique améliorée (plus faible) si l'on compare la résistance thermique de cette même bobine (1) dans l'air sans contact physique avec l'arbre (2).

Une application privilégiée d'un actionneur selon l'invention est la déviation d'un faisceau lumineux, de type laser par exemple, par le déplacement d'un miroir réfléchissant ledit faisceau lumineux. Pour ce faire, il peut donc être connecté solidairement à l'arbre mécanique (2) et sur une de ses extrémités axiales, un miroir (11), le contrôle précis du déplacement de la bobine permettant le déplacement précis du miroir (11). Sur l'autre extrémité de l'arbre mécanique (2), il peut être envisagé de placer un capteur de position afin de connaître la position de l'arbre mécanique (2) et donc de la bobine (1). La connaissance de la position de l'arbre permettra d'ajuster le courant dans la bobine afin de respecter une consigne de position ou de vitesse grâce à l'utilisation d'une électronique de pilotage en boucle fermée.

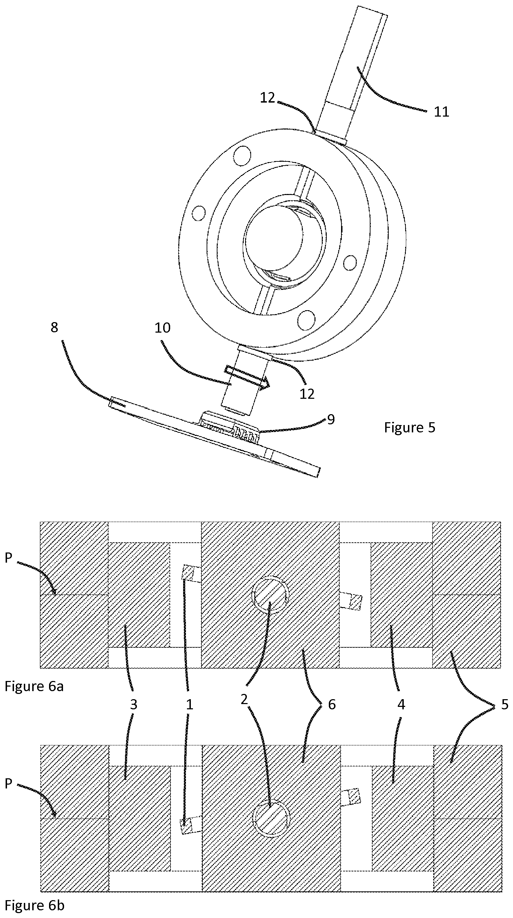

Dans l'exemple de la figure 5, le capteur de position est un capteur magnétique constitué par un aimant capteur (10) dont l'aimantation est dirigée suivant la flèche large évidée, c'est dire orthogonalement à l'axe de rotation (A). Cet aimant capteur (10) coopère avec une sonde magnétosensible (9), placée sur un circuit imprimé (8), qui détecte la variation de la direction du champ magnétique. Un exemple commercial d'un tel capteur est un capteur type Triaxis® de la société Melexis. L'avantage d'un tel capteur est sa précision et sa facilité de montage et la canalisation du flux magnétique généré par les aimants (3, 4) de l'actionneur par la culasse extérieure (5) annule toute perturbation sur la sonde magnétosensible (9).

L'utilisation d'un aimant capteur (10) peut néanmoins ajouter un couple magnétique sur l'actionneur, par interaction magnétique entre l'aimant capteur et l'actionneur, qui introduit donc une fréquence de résonance mécanique. Il conviendra ainsi de dimensionner la distance entre l'aimant capteur (10) et la culasse extérieure (5) afin que la fréquence de résonance soit typiquement inférieure ou égale à la fréquence principale d'alimentation de la bobine (1). On peut aussi opter pour une aimantation bipolaire de l'aimant 10 suivant l'axe A ce qui permettra de minimiser le couplage magnétique entre capteur et actionneur.

En figures 6a et 6b, selon une coupe transversale à l'axe de rotation (A), sont montrées les positions extrêmes que peut prendre la bobine (1) durant le fonctionnement. Ces positions peuvent être plus écartées encore mais dépendent de la course désirée. Dans le cas d'exemple, l'écart angulaire est de l'ordre de 20°, soit +/- 10° autour de la position où la bobine (1) est centrée dans la course. Il est à noter que le plan P de coupe longitudinal de l'actionneur peut être une coupe de construction de l'actionneur afin de disposer d'une culasse extérieure (5) en deux parties et faciliter la construction de l'actionneur.

Le fait de ne pas avoir d'élément de rappel élastique, ou un élément élastique extérieur à l'actionneur qui rajoute une faible raideur, permet d'envisager un fonctionnement oscillant de l'actionneur pas uniquement autour de la position centrée mais aussi avec un décalage. Il peut par exemple osciller autour d'une des deux positions que l'on voit en figures 6a ou 6b ou n'importe quelle oscillation à l'intérieur des positions extrêmes.

Dans ces vues de coupe en figures 6a et 6b on voit par ailleurs que la hauteur transversale du noyau (6) et de la culasse extérieure (5) sera avantageusement supérieure à la hauteur transversale des aimants (3, 4) afin de diminuer l'induction magnétique dans les parties ferromagnétiques et optimiser ainsi les performances en évitant la saturation magnétique.

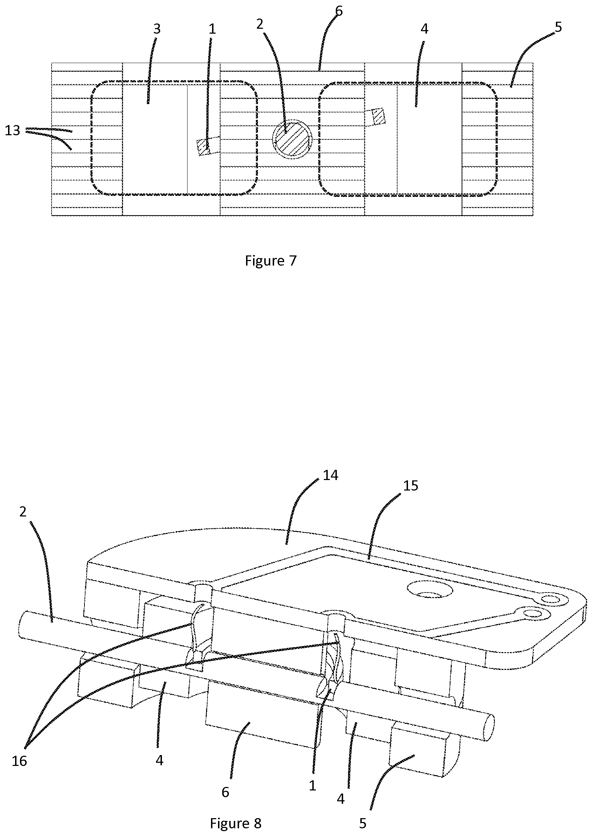

Du fait d'une inductance de bobine relativement faible et de l'absence de mouvement des aimants relativement aux culasse (5, 13) et noyau (6) ferromagnétiques, les pertes par hystérésis magnétique ou par courants induits, appelées globalement pertes fer, sont négligeables. Cependant, par la nature purement cylindrique des structures magnétiques, et par la circulation du flux magnétique, il est possible d'envisager la réalisation du noyau (6) et de la culasse (5) sous la forme de tôles, par exemple en tôle de fer-silicium. Cela permet un éventuel avantage de réalisation et de coût de structure. Cela permet aussi de diminuer l'inductance de la bobine (1), le flux magnétique produit par la bobine traversant alors les différentes tôles, suivant une direction non privilégiée pour les tôles (à travers les tôles), le flux de la bobine (1) en est diminué sans pénaliser le flux produit par les aimants (3, 4) qui circule dans le sens globalement orthogonal (suivant l'orientation de la bobine (1)) à celui de la bobine (1), la circulation du flux de la bobine pouvant être appréciée avec les chemins pointillés schématiques visibles en figure 7.

Un des challenges important à relever pour l'actionneur est une connectique de bobine (1) efficiente et durable. En effet, la bobine étant mobile, son alimentation se fait de manière privilégiée par le biais de fils mobiles. En figure 8, nous donnons un exemple de connexion électrique de ces fils mobiles (16) à un circuit imprimé (14). De manière privilégiée, ces fils mobiles (16) seront connectés à un circuit imprimé (14) le plus proche de l'axe de rotation (A) pour limiter leur excursion angulaire et leur déplacement et ils pourront sortir devant (comme illustré en figure 8) ou derrière l'actionneur (non montré). Les fils mobiles (16) sont alors soudés au circuit imprimé (14) puis l'alimentation peut être déportée par le biais de pistes de cuivre (15) conductrices appartenant au circuit imprimé (14).

Une autre alternative intéressante pour l'alimentation électrique de la bobine (1) est de réaliser une alimentation sans contact par une bobine primaire (17) fixée au circuit imprimé (14) comme on le voit en figure 9. La bobine (1) de l'actionneur peut ainsi être court-circuitée pour éviter tout mouvement des fils de sortie. L'alimentation de la bobine (1) actionneur est ainsi réalisée en alimentant la bobine primaire (17) et par application de la loi de Lenz, à la manière d'un transformateur. Cette solution implique une consommation d'énergie électrique supérieure, du fait des pertes par effet Joule dans les deux bobines (1, 17) et du couplage imparfait entre les deux bobinages (1, 17) mais permettra éventuellement de garantir une durabilité supérieure de la connectique de l'actionneur.

## Revendications

1. Actionneur rotatif à cadre mobile constitué d'une bobine électrique (1) se déplaçant sur une course angulaire autour d'un axe de rotation A, la bobine (1) étant de forme cylindrique elliptique et l'axe de bobinage B étant orthogonal à l'axe de rotation A, la bobine (1) étant placée dans le champ magnétique d'un aimant fixe, **caractérisé en ce que** l'aimant fixe entoure ladite bobine (1) et est constitué de deux parties semi-cylindriques (3, 4) dont les génératrices sont orthogonales à l'axe de rotation A, la première des parties semi-cylindriques présentant un pôle Nord dirigé vers la bobine (1), orthogonalement à la direction des génératrices et étant positionnée à l'extérieur de la bobine (1), la deuxième présentant un pôle Sud dirigé vers la bobine, orthogonalement à la direction des génératrices et étant également positionnée à l'extérieur de la bobine (1) à l'opposé de la première partie, l'actionneur comportant un noyau ferromagnétique (6) intérieur à la bobine (2) et une culasse ferromagnétique (5) extérieure entourant l'aimant fixe, la bobine (1) se déplaçant dans l'entrefer généré entre les parties semi-cylindriques aimantées (3, 4) et le noyau intérieur (6).

2. Actionneur à cadre mobile selon la revendication 1 **caractérisé en ce que** la bobine (1) est solidaire d'un arbre mécanique (2) guidé à l'aide de la culasse extérieure (5).

3. Actionneur à cadre mobile selon la revendication 1 **caractérisé en ce qu'**il ne comporte aucun élément de rappel élastique.

4. Actionneur à cadre mobile selon la revendication 1 **caractérisé en ce que** le système comportant en outre un circuit électronique de pilotage alimentant la bobine (1) avec un signal d'une fréquence principale d'utilisation supérieure à 100 Hz.

5. Actionneur à cadre mobile selon la revendication 1 **caractérisé en ce que** l'arbre mécanique (2) supporte un élément présentant une surface réfléchissante placée au voisinage direct de l'axe de rotation.

6. Actionneur à cadre mobile selon la revendication 4 **caractérisé en ce que** ledit circuit électronique de pilotage alimente la bobine (1) avec un signal périodique à fréquence principale ayant un contenu harmonique présentant au moins une harmonique de rang supérieur à 5 ayant une amplitude supérieure à 10% de l'amplitude de la fréquence principale.

7. Actionneur à cadre mobile selon la revendication 4 **caractérisé en ce qu'**il comporte en outre un capteur de position angulaire de ladite bobine (1), délivrant un signal audit circuit électronique de pilotage pour asservir la tension d'alimentation de ladite bobine (1) en fonction d'un profil de référence de la vitesse en fonction de la position.

8. Actionneur à cadre mobile selon la revendication 1 **caractérisé en ce que** ladite bobine (1) présente une section longitudinale elliptique non circulaire.

9. Actionneur à cadre mobile selon la revendication 1 **caractérisé en ce que** ladite bobine (1) présente une section longitudinale circulaire.

10. Actionneur à cadre mobile selon la revendication 1 **caractérisé en ce que** ledit arbre mécanique (2) traverse ledit noyau ferromagnétique (6), sans contact ni guidage avec ledit noyau (6).

11. Actionneur à cadre mobile selon la revendication 1 **caractérisé en ce que** ledit arbre mécanique (2) est guidé au niveau dudit noyau ferromagnétique (6), sans contact ni guidage avec culasse ferromagnétique (5).

12. Actionneur à cadre mobile selon la revendication 7 **caractérisé en ce que** ledit arbre mécanique (2) présente un aimant capteur (10) positionné au voisinage d'une sonde (9) magnétosensible et coopérant avec ladite sonde (9) détectant la position de l'aimant capteur (10).

13. Actionneur à cadre mobile selon la revendication 12 **caractérisé en ce que** l'actionneur est piloté par un signal périodique à fréquence principale et en qu'il présente, en interaction magnétique avec l'aimant capteur (10), une fréquence de résonance mécanique inférieure ou égale à ladite fréquence principale.

14. Actionneur à cadre mobile selon la revendication 1 **caractérisé en ce que** le noyau (6) et la culasse extérieure (5) sont réalisés par empilement de tôles ferromagnétiques.

15. Procédé de commande d'un actionneur tel que défini dans la revendication 1, pour un système d'éclairage adaptatif **caractérisé en ce que** la valeur de la tension d'alimentation de la bobine (1) est modifiée périodiquement en fonction d'un signal de position provenant d'un capteur de position angulaire de ladite bobine (1) et d'un profil de la vitesse en fonction de la position.

**Patentansprüche**

1. Drehstellglied mit beweglichem Rahmen, bestehend aus einer elektrischen Spule (1), die sich über einen Winkelhub um eine Drehachse A bewegt, wobei die Spule (1) eine elliptische zylindrische Form hat und die Wicklungsachse B orthogonal zur Drehachse A ist, wobei die Spule (1) im Magnetfeld eines festen Magneten angeordnet ist, **dadurch gekennzeichnet, dass** der feste Magnet die Spule (1) umgibt und aus zwei halbzylindrischen Teilen (3, 4) besteht, deren Generatoren orthogonal zur Drehachse A sind, wobei der erste der halbzylindrischen Teile einen Nordpol aufweist, der zur Spule (1) gerichtet ist, orthogonal zur Richtung der Generatoren und außerhalb der Spule (1) positioniert ist, wobei der zweite einen Südpol aufweist, der zur Spule gerichtet ist, orthogonal zur Richtung der Generatoren und auch außerhalb der Spule (1) gegenüber dem ersten Teil positioniert ist, wobei das Stellglied einen ferromagnetischen Kern (6) innerhalb der Spule (2) und ein äußeres ferromagnetisches Joch (5), das den festen Magneten umgibt, umfasst, wobei sich die Spule (1) in dem Luftspalt bewegt, der zwischen den halbzylindrischen magnetisierten Teilen (3, 4) und dem inneren Kern (6) erzeugt wird.

2. Stellglied mit beweglichem Rahmen nach Anspruch 1, **dadurch gekennzeichnet, dass** die Spule (1) fest mit einer mechanischen Welle (2), die mittels des äußeren Jochs (5) geführt wird, verbunden ist.

3. Stellglied mit beweglichem Rahmen nach Anspruch 1, **dadurch gekennzeichnet, dass** es kein elastisches Rückstellelement aufweist.

4. Stellglied mit beweglichem Rahmen nach Anspruch 1, **dadurch gekennzeichnet, dass** das System ferner eine elektronische Steuerschaltung umfasst, die der Spule (1) ein Signal mit einer Hauptbetriebsfrequenz von mehr als 100 Hz zuführt.

5. Stellglied mit beweglichem Rahmen nach Anspruch 1, **dadurch gekennzeichnet, dass** die mechanische Welle (2) ein Element mit einer reflektierenden Oberfläche trägt, die in unmittelbarer Nähe der Drehachse angeordnet ist.

6. Stellglied mit beweglichem Rahmen nach Anspruch 4, **dadurch gekennzeichnet, dass** die elektronische Steuerschaltung der Spule (1) ein periodisches Hauptfrequenzsignal mit einem Oberwellengehalt mit mindestens einer Oberwelle mit einem Rang größer als 5 und einer Amplitude größer als 10 % der Amplitude der Hauptfrequenz liefert.

7. Stellglied mit beweglichem Rahmen nach Anspruch 4, **dadurch gekennzeichnet, dass** es weiterhin einen Winkelpositionssensor der Spule (1) umfasst, der ein Signal an die elektronische Steuerschaltung liefert, um die Versorgungsspannung der Spule (1) in Abhängigkeit von einem Referenzprofil der Geschwindigkeit in Abhängigkeit von der Position zu steuern.

8. Stellglied mit beweglichem Rahmen nach Anspruch 1, **dadurch gekennzeichnet, dass** die Spule (1) einen nicht kreisförmigen, elliptischen Längsschnitt aufweist.

9. Stellglied mit beweglichem Rahmen nach Anspruch 1, **dadurch gekennzeichnet, dass** die Spule (1) einen kreisförmigen Längsschnitt aufweist.

10. Stellglied mit beweglichem Rahmen nach Anspruch 1, **dadurch gekennzeichnet, dass** die mechanische Welle (2) den ferromagnetischen Kern (6) ohne Kontakt oder Führung mit dem Kern (6) durchläuft.

11. Stellglied mit beweglichem Rahmen nach Anspruch 1, **dadurch gekennzeichnet, dass** die mechanische Welle (2) an dem ferromagnetischen Kern (6) ohne Kontakt oder Führung mit einem ferromagnetischen Joch (5) geführt wird.

12. Stellglied mit beweglichem Rahmen nach Anspruch 7, **dadurch gekennzeichnet, dass** die mechanische Welle (2) einen Sensormagneten (10) aufweist, der in der Nähe einer magnetempfindlichen Sonde (9) angeordnet ist und mit der Sonde (9) zusammenwirkt, die die Position des Sensormagneten (10) erfasst.

13. Stellglied mit beweglichem Rahmen nach Anspruch 12, **dadurch gekennzeichnet, dass** das Stellglied durch ein periodisches Signal mit einer Hauptfrequenz gesteuert wird und in magnetischer Wechselwirkung mit dem Sensormagneten (10) eine mechanische Resonanzfrequenz aufweist, die kleiner oder gleich der Hauptfrequenz ist.

14. Stellglied mit beweglichem Rahmen nach Anspruch 1, **dadurch gekennzeichnet, dass** der Kern (6) und das äußere Joch (5) durch Stapeln ferromagnetischer Bleche hergestellt werden.

15. Verfahren zur Steuerung eines Stellglieds nach Anspruch 1 für ein adaptives Beleuchtungssystem, **dadurch gekennzeichnet, dass** der Wert der Versorgungsspannung der Spule (1) periodisch als Funktion eines Positionssignals von einem Winkelpositionssensor der Spule (1) und von einem Geschwindigkeitsprofil als Funktion der Position geändert wird.

**Claims**

1. A rotary actuator with movable frame consisting of an electric coil (1) moving over an angular travel around an axis of rotation A, the coil (1) being of elliptical cylindrical shape and the winding axis B being orthogonal to the axis of rotation A, the coil (1) being placed in the magnetic field of a fixed magnet, **characterized in that** the fixed magnet surrounds said coil (1) and consists of two semi-cylindrical parts (3, 4) whose generators are orthogonal to the axis of rotation A, the first of the semi-cylindrical parts having a North pole directed towards the coil (1), orthogonally to the direction of the generators and being positioned outside the coil (1), the second having a South pole directed towards the coil, orthogonally to the direction of the generators and also being positioned outside the coil (1) opposite the first part, the actuator comprising a ferromagnetic core (6) inside the coil (2) and an outer ferromagnetic yoke (5) surrounding the fixed magnet, the coil (1) moving in the air gap generated between the semi-cylindrical magnetized parts (3, 4) and the inner core (6).

2. The actuator with movable frame according to claim 1, **characterized in that** the coil (1) is integral with a mechanical shaft (2) guided by means of the outer yoke (5).

3. The actuator with movable frame according to claim 1, **characterized in that** it has no elastic return element.

4. The actuator with movable frame according to claim 1, **characterized in that** the system further comprising an electronic control circuit supplying the coil (1) with a signal of a main frequency of use greater than 100 Hz.

5. The actuator with movable frame according to claim 1, **characterized in that** the mechanical shaft (2) supports an element having a reflecting surface placed in the direct vicinity of the axis of rotation.

6. The actuator with movable frame according to claim 4, **characterized in that** said electronic control circuit supplies the coil (1) with a main frequency periodic signal having a harmonic content having at least one harmonic higher than 5 having an amplitude greater than 10% of the amplitude of the main frequency.

7. The actuator with movable frame according to claim 4, **characterized in that** it further comprises an angular position sensor of said coil (1), delivering a signal to said electronic circuit for controlling the steering of said coil supply voltage (1) as a function of a speed reference profile as a function of the position.

8. The actuator with movable frame according to claim 1, **characterized in that** said coil (1) has a non-circular elliptical longitudinal section.

9. The actuator with movable frame according to claim 1, **characterized in that** said coil (1) has a circular longitudinal section.

10. The actuator with movable frame according to claim 1, **characterized in that** said mechanical shaft (2) passes through said ferromagnetic core (6), without contact or guidance with said core (6).

11. The actuator with movable frame according to claim 1, **characterized in that** said mechanical shaft (2) is guided at said ferromagnetic core (6), without contact or guidance with ferromagnetic yoke (5).

12. The actuator with movable frame according to claim 7, **characterized in that** said mechanical shaft (2) has a sensor magnet (10) positioned in the vicinity of a probe (9) and magnetically cooperating with said probe (9) detecting the position of the sensor magnet (10).

13. The actuator with movable frame according to claim 12, **characterized in that** the actuator is controlled by a periodic signal with main frequency and **in that** it has, in magnetic interaction with the sensor magnet (10), a mechanical resonance frequency less than or equal to said main frequency.

14. The actuator with movable frame according to claim 1, **characterized in that** the core (6) and the outer yoke (5) are produced by stacking ferromagnetic sheets.

15. A method for controlling an actuator as defined in claim 1, for an adaptive lighting system **characterized in that** the value of the supply voltage of the coil (1) is periodically modified according to a position signal from an angular position sensor of said coil (1) and from a profile of the speed as a function of the position.

Figure 1a

Figure 1b

Figure 2

Figure 3

Figure 4a

Figure 4b

Figure 5

Figure 6a

Figure 6b

Figure 7

Figure 8

Figure 9

Figure 10

Figure 11

Figure 12

Figure 13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP H06165466 B
- US 6275319 B
- US 3735258 A
- EP 2686554 A
- JP 6165466 A
- EP 2690352 A